(19) **Europäisches Patentamt European Patent Office Office européen des brevets**

(11) **EP 4 528 356 A1**

(12) **EUROPEAN PATENT APPLICATION**
published in accordance with Art. 153(4) EPC

(43) Date of publication:
26.03.2025 Bulletin 2025/13

(21) Application number: 23829418.5

(22) Date of filing: 18.02.2023

(51) International Patent Classification (IPC):
*G02B 27/01* (2006.01)

(52) Cooperative Patent Classification (CPC):
**B60K 35/00; B60K 35/232; B60R 11/02;
G02B 27/00; G02B 27/01**

(86) International application number:
**PCT/CN2023/077023**

(87) International publication number:
**WO 2024/001225 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.06.2022 CN 202210742008

(71) Applicant: Shenzhen Yinwang Intelligent
Technologies Co., Ltd.
Shenzhen, Guangdong 518129 (CN)

(72) Inventors:
• **MAO, Lei**
**Shenzhen, Guangdong 518129 (CN)**
• **TU, Qiming**
**Shenzhen, Guangdong 518129 (CN)**
• **WU, Zhiheng**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **VIRTUAL IMAGE DISPLAY APPARATUS, METHOD AND APPARATUS FOR GENERATING IMAGE DATA, AND RELATED DEVICE**

(57) A virtual image display apparatus (50), an image data generation method and apparatus, and a related device are provided. The virtual image display apparatus (50) includes an image generation unit (51) and an imaging unit (52). The image generation unit (51) is configured to: obtain image data, display an image based on the image data, and output image light. The image displayed by the image generation unit (51) includes a target image. A location of the target image in the displayed image corresponds to a viewing location in an eye box of the virtual image display apparatus, and the location of the target image in the displayed image changes with the viewing location. The imaging unit (52) is configured to form a virtual image in a display region based on the image light. The eye box of the virtual image display apparatus (50) is large in size.

FIG. 5

## Description

This application claims priority to Chinese Patent Application No. 202210742008.X, filed with the China National Intellectual Property Administration on June 27, 2022 and entitled "VIRTUAL IMAGE DISPLAY APPARATUS, IMAGE DATA GENERATION METHOD AND APPARATUS, AND RELATED DEVICE", which is incorporated herein by reference in its entirety.

## TECHNICAL FIELD

This application relates to the field of display technologies, and in particular, to a virtual image display apparatus, an image data generation method and apparatus, and a related device.

## BACKGROUND

With development of display technologies, there is increasing use of virtual image display apparatuses for displaying virtual images, for example, a desktop display and a head-up display (head-up display, HUD).

In a related technology, a virtual image display apparatus includes an image generation unit and an imaging unit. The image generation unit is configured to: obtain image data, generate an image based on the image data, and output image light. The imaging unit is configured to form a virtual image in an entire display region based on the image light. A complete virtual image can be viewed when an eye of a user moves in an eye box of the virtual image display apparatus.

A viewing distance corresponding to any viewing location in the eye box is less than a viewing distance corresponding to a reference point. The reference point is a vertex of an angle of view corresponding to a display region. When an area of a display region of the imaging unit and a size of an optical aperture of the virtual image display apparatus are fixed, to ensure that a complete virtual image can be viewed at each viewing location in the eye box, a size of the eye box is small. In other words, the user can view the complete virtual image in only a small region. This is inconvenient for use.

## SUMMARY

This application provides a virtual image display apparatus, an image data generation method and apparatus, and a related device, to increase a size of an eye box, so that a user can view, in a larger range, a virtual image corresponding to a target image. This is convenient for use by the user.

According to a first aspect, a virtual image display apparatus is provided. The virtual image display apparatus includes an image generation unit and an imaging unit. The image generation unit is configured to: obtain image data, display an image based on the image data, and output image light. The image displayed by the image generation unit includes a target image. A location of the target image in the displayed image corresponds to a viewing location in an eye box of the virtual image display apparatus, and the location of the target image in the displayed image changes with the viewing location. The imaging unit is configured to form a virtual image in a display region based on the image light.

In this application, a location of the target image in the image displayed by the image generation unit corresponds to the viewing location in the eye box of the virtual image display apparatus, and the location of the target image in the image displayed by the image generation unit changes with the viewing location, that is, target images corresponding to different viewing locations in the eye box of the virtual image display apparatus have different locations in the image displayed by the image generation unit. Because the image light output by the image generation unit corresponds to the image displayed by the image generation unit and the virtual image is formed based on the image light, a location, in an entire display region of the virtual image display apparatus, of a virtual image corresponding to the target image also changes with the viewing location. In a case in which a size of the virtual image corresponding to the target image is fixed and a size of an optical aperture of the virtual image display apparatus and a viewing distance are fixed, compared with a solution in which the virtual image corresponding to the target image is directly imaged in the entire display region of the virtual image display apparatus, in this solution, a user can view, in a larger range, a complete virtual image corresponding to the target image, so that a size of the eye box is increased. This is convenient for use by the user.

Herein, the viewing distance may be a distance from the viewing location to a center of the virtual image in a chief ray direction of a central field of view of the virtual image display apparatus, or may be a distance from the viewing location to a center of a reference optical element. The reference optical element is an optical element that is closest to a viewer and that is of optical elements participating in imaging in an optical path, for example, a curved mirror closest to the viewer on a desktop display, or a windshield of a transportation means in which a HUD is disposed.

In this application, a complete virtual image corresponding to the target image can be viewed at any viewing location in the eye box.

For example, the location of the target image in the image displayed by the image generation unit is a location, in an entire image region of the image displayed by the image generation unit, of a first image region in which the target image is located, and the location may be represented by coordinates of at least some pixels in the first image region.

In some examples, the location of the target image may be represented by using coordinates of a reference point and a size of the target image. Herein, the reference point may be any point in the target image, for example, a center point of the target image, a vertex of the target image (for example, an upper left vertex or a lower left vertex of a rectangular target image), or any point on an outer contour line of the target image. The coordinates of the reference point are coordinates of a pixel corresponding to the reference point in a to-be-displayed image. The size of the target image includes a length, a width, an area, and the like of the target image. The location of the target image in the image displayed by the image generation unit may be uniquely determined with reference to the coordinates of the reference point and the size of the target image.

In some other examples, the location of the target image may be represented by using coordinates of a reference point set, and the reference point set includes at least two reference points. Coordinates of all reference points in the reference point set can play a positioning function and indicate a size of the target image. For example, the reference point set includes four vertices of a rectangular target image, two vertices on a diagonal of a rectangular target image, or the like. A location of the target image in a to-be-displayed image may be uniquely determined based on the coordinates of the reference point set.

In some examples, a viewing distance corresponding to each viewing location in the eye box is greater than a viewing distance corresponding to a reference point, and the reference point is a vertex of a first angle of view corresponding to the display region.

In this application, the reference point is the vertex of the first angle of view of the display region. If one eye of the user is located at the reference point, a complete virtual image displayed in the display region can be viewed. When a viewing location of the user is defined by using a binocular center location, if the viewing location of the user is far away from the reference point, the user may view a small non-display region (a peripheral region of the display region). If the viewing location of the user is sufficiently far away from the reference point, a virtual image in a part of the display region is viewed, and an image in a non-display region is completely invisible. Therefore, when a viewing distance corresponding to any viewing location in the eye box of the virtual image display apparatus is greater than the viewing distance corresponding to the reference point, a display region viewed by the user occupies a large proportion of an entire viewing region of the user. This helps improve user experience.

In this application, the display region includes a first display subregion used to display a virtual image corresponding to the target image. When a center of the first display subregion coincides with a center of the display region, a ratio of a first distance to a second distance falls within a ratio range. The first distance is a distance between the reference point and a center point. The second distance is a distance between a center location of the eye box and the center point.

The center location of the eye box is on a chief ray of a central field of view of the virtual image display apparatus. The center point is a point of intersection between the chief ray and a plane on which a point of intersection between a first marginal ray and a second marginal ray is located. The first marginal ray is a marginal ray corresponding to the first angle of view. The second marginal ray is a marginal ray corresponding to a second angle of view corresponding to the first display subregion. The ratio range is [20%, 90%]. Herein, there are an infinite quantity of first marginal rays and second marginal rays. Correspondingly, there are an infinite quantity of points of intersection between the first marginal rays and the second marginal rays, to form a roughly circular region. A radial size of the roughly circular region is a size of the optical aperture of the virtual image display apparatus.

When the ratio of the first distance to the second distance falls within the ratio range, most parts of the display region of the virtual image display apparatus can be viewed at each viewing location in the eye box, and the first display subregion used to display the target image occupies a large area in the entire display region. This is convenient for the user to view, and provides good user experience.

In some examples, the imaging unit includes a curved mirror, and the curved mirror is configured to reflect the image light output by the image generation unit, to form the virtual image.

In some other examples, the imaging unit includes a windshield, and the windshield is configured to reflect the image light output by the image generation unit, to form the virtual image.

In some examples, the ratio of the first distance to the second distance is equal to a ratio of a difference between the optical aperture of the virtual image display apparatus and a reference interpupillary distance to a sum of the optical aperture and the reference interpupillary distance. When the ratio of the first distance to the second distance meets the condition, if the user views at the center location of the eye box, the virtual image corresponding to the target image may be located in the middle of the entire display region of the virtual image display apparatus, and located in an overlapping region between display regions viewed by both eyes of the user. This helps improve viewing experience of the user.

In some examples, in the eye box, an area of a target image corresponding to a first viewing location is greater than an area of a target image corresponding to a second viewing location, and a viewing distance corresponding to the first viewing location is less than a viewing distance corresponding to the second viewing location. For example, the target image corresponding to the first viewing location is obtained by scaling up or down the target image corresponding to the second viewing location.

In this way, the virtual image corresponding to the target image increases as the viewing distance corresponding to the viewing location decreases, or the virtual image corresponding to the target image decreases as the viewing distance corresponding to the viewing location increases. When viewing at the first viewing location close to the virtual image, the user can view a large virtual image of the target image; and when viewing at the second viewing location far away from the virtual image, the user can view a small virtual image of the target image. Due to limitation of an aperture diaphragm, a closer distance between the user and the virtual image indicates a larger range of the display region that can be viewed by the user, and a longer distance between the user and the virtual image indicates a smaller range of the display region that can be viewed by the user. Therefore, the virtual image of the target image can be scaled up when the user is closer to the virtual image, and the virtual image of the target image can be scaled down when the user is farther away from the virtual image, to ensure that the user can always view the complete virtual image of the target image, view few parts of a virtual image corresponding to a background image, and even cannot view the virtual image corresponding to the background image.

In some other examples, in the eye box, a virtual image of a target image corresponding to a third viewing location deviates toward a first direction relative to a virtual image of a target image corresponding to a fourth viewing location by using the chief ray of the central field of view of the virtual image display apparatus as a reference, and the third viewing location deviates toward a second direction relative to the fourth viewing location by using the chief ray as a reference. The first direction and the second direction are two opposite directions by using the chief ray as a reference.

Herein, that the third viewing location deviates toward the second direction relative to the fourth viewing location by using the chief ray as a reference means that the third viewing location is farther away from the chief ray in the second direction than the fourth viewing location, and the second direction is a radially outward direction by using the chief ray as a center.

In this example, the virtual image corresponding to the target image is translated along with translation of the viewing location, and a translation direction of the virtual image corresponding to the target image is opposite to a translation direction of the viewing location.

Due to limitation of the aperture diaphragm, the viewing location of the user deviates from the chief ray in a direction perpendicular to the chief ray. In this case, the viewed virtual image moves in a direction perpendicular to the chief ray and opposite to a deviation direction of the viewing location of the user. In this way, when the user views at the third viewing location close to the chief ray, a center of a virtual image of a viewed target image is close to the chief ray; and when the user views at the fourth viewing location far away from the chief ray, a center of a virtual image of a viewed target image is far away from the chief ray, to ensure that the user can always view a complete virtual image of the target image, and cannot view a virtual image corresponding to the background image.

Optionally, the virtual image corresponding to the target image is a three-dimensional image or a two-dimensional image.

In some examples, the displayed image further includes a background image, and the background image is an image other than the target image in the displayed image. Optionally, the background image is a static image or a dynamic image.

Optionally, the virtual image includes the virtual image corresponding to the target image and a virtual image corresponding to the background image. The virtual image corresponding to the background image is on a periphery of the virtual image corresponding to the target image or the virtual image corresponding to the target image covers at least a part of the virtual image corresponding to the background image. Herein, that the virtual image corresponding to the target image covers at least a part of the virtual image corresponding to the background image means that the virtual image corresponding to the target image is at a location that is in front of the virtual image corresponding to the background image and that is close to the viewer, so that at least a part of the virtual image corresponding to the background image is shielded by the virtual image corresponding to the target image.

According to a second aspect, an image data generation method is provided. The method includes: determining an eye location of a viewer in a virtual image display apparatus, where the eye location is in an eye box of the virtual image display apparatus; determining location indication information based on the eye location, where the location indication information indicates a location of a target image in a to-be-displayed image, and the location of the target image changes with the eye location of the viewer; and generating image data of the to-be-displayed image based on image data of the target image and the location indication information, where the image data of the to-be-displayed image is used by the virtual image display apparatus to form a virtual image in a display region.

In this application, the method may be performed by a processor. The processor may be integrated into the virtual image display apparatus, or may be an external component of the virtual image display apparatus.

In this application, the location of the target image in the to-be-displayed image is determined based on the eye location of the viewer in the virtual image display apparatus, and the image data of the to-be-displayed image is generated, so that the virtual image display apparatus forms the virtual image in the display region. The location of the target image in the to-be-displayed image changes with the eye location of the viewer. Because image light output by an image generation unit corresponds to the image data of the to-be-displayed image and the virtual image is formed based on the image light, a location, in an entire display region of the virtual image display apparatus, of a virtual image corresponding to the target image also changes with the eye location. In a case in which a size of the virtual image corresponding to the target image is fixed and a viewing distance is fixed, compared with a solution in which the virtual image corresponding to the target image is directly imaged in the entire display region of the virtual image display apparatus, in this solution, a user can view, in a larger range, a complete virtual image corresponding to the target image, so that a size of the eye box is increased. This is convenient for use by the user.

In a possible implementation, the location indication information includes location information of a first display subregion, the location information of the first display subregion indicates a location of the first display subregion in the display region of the virtual image display apparatus, and the first display subregion is used to display a virtual image corresponding to the target image. The determining location indication information based on the eye location includes: determining, based on a correspondence between a viewing location and location information of a display subregion, the location information of the first display subregion corresponding to the eye location.

For example, the location information of the first display subregion includes geometric information of the first display subregion and a location of a reference point in the first display subregion, and the geometric information of the first display subregion indicates an area of the first display subregion. Herein, the geometric information includes a shape and a size of the first display subregion.

In some examples, in the correspondence, an area of a display subregion corresponding to a first viewing location is greater than an area of a display subregion corresponding to a second viewing location, and a viewing distance corresponding to the first viewing location is less than a viewing distance corresponding to the second viewing location.

In some other examples, in the correspondence, a location of a display subregion corresponding to a third viewing location deviates toward a first direction relative to a location of a display subregion corresponding to a fourth viewing location by using a chief ray of a central field of view of the virtual image display apparatus as a reference, and the third viewing location deviates toward a second direction relative to the fourth viewing location by using the chief ray as a reference. The first direction and the second direction are two opposite directions by using the chief ray as a reference.

In another possible implementation, the location indication information includes location information of a first image region, and the first image region is a region in which the target image is located. The determining location indication information based on the eye location includes: determining, based on a correspondence between a viewing location and location information of an image region, location information of a first image region corresponding to the eye location.

In a possible implementation, the generating image data of the to-be-displayed image based on image data of the target image and the location indication information includes: combining the image data of the target image and image data of a background image to obtain the image data of the to-be-displayed image, where the target image is at a location indicated by the location indication information.

In some examples, the background image is located in a region other than the region in which the target image is located in the to-be-displayed image.

To improve a display effect of the virtual image display apparatus, the method may further include: performing distortion correction processing on the image data of the target image based on the eye location or the location indication information. Due to different distortion degrees, corresponding to different parts of the display region of the virtual image display apparatus, of the virtual image, distortion correction processing may be performed on the image data of the target image based on the eye location or the location indication information, to improve a display effect of the virtual image corresponding to the target image.

For example, the performing distortion correction processing on the image data of the target image based on the eye location or the location indication information includes: obtaining a distortion correction parameter corresponding to the eye location or the location indication information, where the distortion correction parameter is used to compensate for distortion caused by an optical element of the virtual image display apparatus; and performing distortion correction processing on the image data of the target image based on the distortion correction parameter.

In some examples, a correspondence between the viewing location and a location of the display subregion and a correspondence between the location of the display subregion and the distortion correction parameter may be pre-established. A location of the first display subregion corresponding to the eye location may be determined based on the correspondence between the viewing location and the location of the display subregion. Then, a distortion correction parameter corresponding to the location of the first display subregion is determined based on the correspondence between the location of the display subregion and the distortion correction parameter. The distortion correction parameter corresponding to the location of the first display subregion is the distortion correction parameter corresponding to the eye location.

In some other examples, a correspondence between the viewing location and the distortion correction parameter may be generated based on a correspondence between the viewing location and a location of the display subregion and a correspondence between the location of the display subregion and the distortion correction parameter. In this way, the distortion correction parameter corresponding to the eye location may be directly determined based on the correspondence between the viewing location and the distortion correction parameter.

In some other examples, a correspondence between a location of the image region and a location of the display subregion and a correspondence between the location of the display subregion and the distortion correction parameter may be pre-established. A location of a first display subregion corresponding to the location indicated by the location indication information may be determined based on the correspondence between the location of the image region and the location of the display subregion. Then, a distortion correction parameter corresponding to the location of the first display subregion is determined based on the correspondence between the location of the display subregion and the distortion correction parameter. The distortion correction parameter corresponding to the location of the first display subregion is the distortion correction parameter corresponding to the location indication information.

In some other examples, a correspondence between a location of the image region and the distortion correction parameter may be generated based on a correspondence between the location of the image region and a location of the display subregion and a correspondence between the location of the display subregion and the distortion correction parameter. In this way, the distortion correction parameter corresponding to the location indication information may be directly determined based on the correspondence between the location of the image region and the distortion correction parameter.

According to a third aspect, an image data generation apparatus is provided. The apparatus includes an eye location determining module, an information determining module, and a generation module. The eye location determining module is configured to determine an eye location of a viewer in a virtual image display apparatus, where the eye location is in an eye box of the virtual image display apparatus. The information determining module is configured to determine location indication information based on the eye location, where the location indication information indicates a location of a target image in a to-be-displayed image, and the location of the target image changes with the eye location of the viewer. The generation module is configured to generate image data of the to-be-displayed image based on image data of the target image and the location indication information, where the image data of the to-be-displayed image is used by the virtual image display apparatus to form a virtual image in a display region.

In a possible implementation, the location indication information includes location information of a first display subregion, the location information of the first display subregion indicates a location of the first display subregion in the display region of the virtual image display apparatus, and the first display subregion is used to display a virtual image corresponding to the target image. The information determining module is configured to determine, based on a correspondence between a viewing location and location information of a display subregion, the location information of the first display subregion corresponding to the eye location.

In another possible implementation, the location indication information includes location information of a first image region, and the first image region is a region in which the target image is located. The information determining module is configured to determine, based on a correspondence between a viewing location and location information of an image region, location information of a first image region corresponding to the eye location.

In some examples, the generation module is configured to combine the image data of the target image and image data of a background image to obtain the image data of the to-be-displayed image, where the target image is at a location indicated by the location indication information.

Optionally, the apparatus further includes a correction module, configured to perform distortion correction processing on the image data of the target image based on the eye location or the location indication information.

For example, the correction module includes a parameter obtaining submodule and a correction submodule. The parameter obtaining submodule is configured to obtain a distortion correction parameter corresponding to the eye location or the location indication information, where the distortion correction parameter is used to compensate for distortion caused by an optical element of the virtual image display apparatus. The correction submodule is configured to perform distortion correction processing on the image data of the target image based on the distortion correction parameter.

According to a fourth aspect, a computer device is provided, where the computer device includes a processor and a memory. The memory is configured to store a software program. The processor executes the software program stored in the memory, to enable the computer device to implement the method according to any example in the third aspect.

According to a fifth aspect, a computer-readable storage medium is provided. The computer-readable storage medium stores computer instructions. When the computer instructions in the computer-readable storage medium are executed by a computer device, the computer device is enabled to perform the method according to any example in the third aspect.

According to a sixth aspect, a computer program product is provided. The computer program product includes computer instructions. When the computer instructions are executed by a computer device, the computer device is enabled to perform the method according to any example in the third aspect.

According to a seventh aspect, a display device is provided. The display device includes a processor and a virtual image display apparatus. The virtual image display apparatus is any one of the foregoing virtual image display apparatuses. The processor is configured to generate image data of a to-be-displayed image based on any one of the foregoing methods. The virtual image display apparatus is configured to display a virtual image based on the image data.

In some examples, the display device further includes a power supply that supplies power to the processor and the virtual image display apparatus.

In some examples, the display device is a head-up display device or a desktop display device.

According to an eighth aspect of this application, a transportation means is provided, and the transportation means includes any one of the foregoing display devices. For example, the transportation means includes but is not limited to an automobile, an airplane, a train, or a ship.

## BRIEF DESCRIPTION OF DRAWINGS

FIG. 1 is a diagram of a use state of a display apparatus according to an embodiment of this application;

FIG. 2 is a diagram of a use state of another display apparatus according to an embodiment of this application;

FIG. 3 is a diagram of a use state of still another display apparatus according to an embodiment of this application;

FIG. 4 is a diagram of a use state of yet another display apparatus according to an embodiment of this application;

FIG. 5 is a diagram of a structure of a virtual image display apparatus according to an embodiment of this application;

FIG. 6 is a diagram of a structure of another virtual image display apparatus according to an embodiment of this application;

FIG. 7 is a diagram of a relationship between a viewing location in an eye box of a virtual image display apparatus and a reference point according to an embodiment of this application;

FIG. 8 is a schematic flowchart of an image data generation method according to an embodiment of this application;

FIG. 9 is a diagram of a relationship between a viewing location and a display subregion according to an embodiment of this application;

FIG. 10 is a diagram of a relationship between a first display subregion corresponding to each viewing location in FIG. 9 and an entire display region;

FIG. 11 is a diagram of another relationship between a viewing location and a display subregion according to an embodiment of this application;

FIG. 12 is a diagram of a relationship between a first display subregion corresponding to each viewing location in FIG. 11 and an entire display region;

FIG. 13 is a diagram of a structure of an image data generation apparatus according to an embodiment of this application;

FIG. 14 is a diagram of a structure of a computer device according to an embodiment of this application;

FIG. 15 is a schematic circuit of a display device according to an embodiment of this application; and

FIG. 16 is a diagram of a functional framework of a transportation means according to an embodiment of this application.

## DESCRIPTION OF EMBODIMENTS

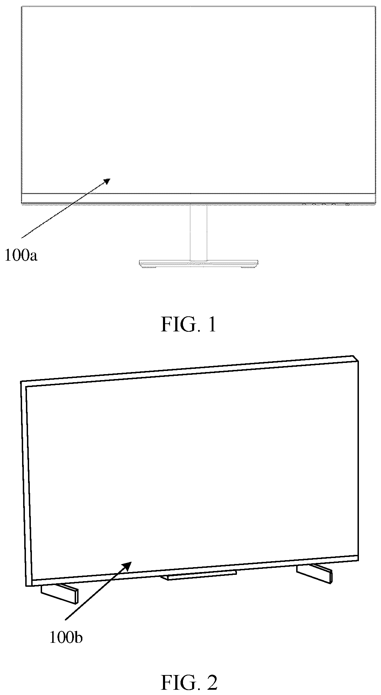

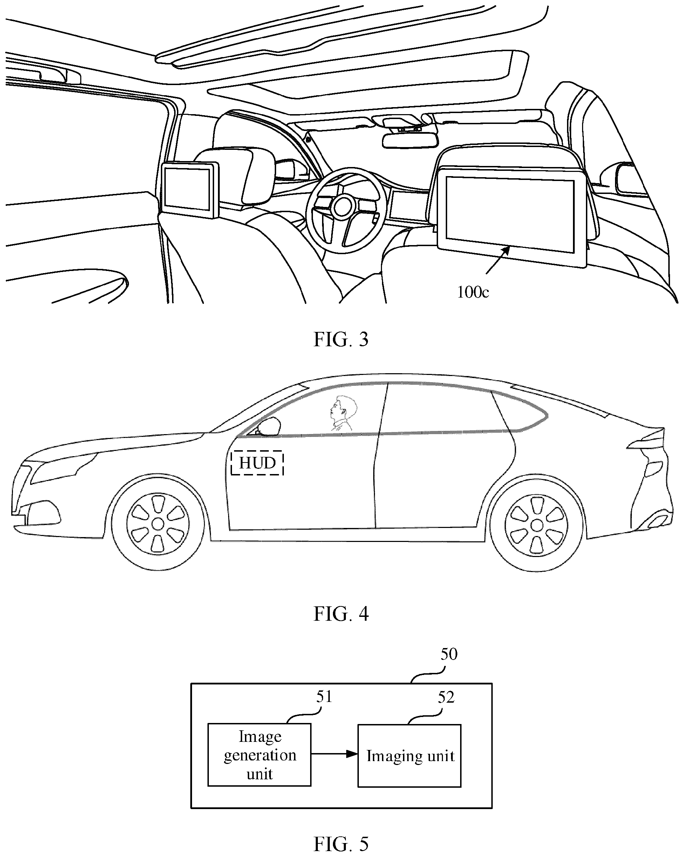

The following describes in detail, with reference to the accompanying drawings, a virtual image display apparatus provided in embodiments of this application. The virtual image display apparatus may be used as an ordinary display (for example, as shown in 100a in FIG. 1) for office use, or may be used as a television (for example, as shown in 100b in FIG. 2) for home entertainment (as a television), or may be used as a vehicle display (for example, as shown in 100c in FIG. 3, the virtual image display apparatus is mounted on a seat of a vehicle), or may be used as a head-up display (for example, as shown in 100d in FIG. 4, the virtual image display apparatus is mounted on a vehicle and used as the head-up display (head-up display, HUD)), or may be used as a near-eye display (for example, a virtual reality (virtual reality) helmet or VR glasses). A physical size, a display size, and a resolution of the virtual image display apparatus may be adjusted based on a usage scenario. In this application, the virtual image display apparatus may also be referred to as a virtual image display system.

FIG. 5 is a diagram of a structure of a virtual image display apparatus according to an embodiment of this application. As shown in FIG. 5, the virtual image display apparatus 50 includes an image generation unit 51 and an imaging unit 52. The image generation unit 51 is configured to: obtain image data, display an image based on the image data, and output image light. The imaging unit 52 is configured to form a virtual image in a display region based on the image light output by the image generation unit 51. The image displayed by the image generation unit 51 includes a target image. A location of the target image in the image displayed by the image generation unit 51 corresponds to a viewing location in an eye box of the virtual image display apparatus, and the location of the target image in the image displayed by the image generation unit 51 changes with the viewing location. Target images corresponding to different viewing locations have different locations in the image displayed by the image generation unit 51.

The eye box of the virtual image display apparatus is a region in which eyes can move. If the eyes are located in the region, a complete virtual image corresponding to the target image can be viewed. If the eyes are located outside the region, a complete virtual image corresponding to the target image cannot be viewed. In embodiments of this application, the eye box includes a plurality of viewing locations (locations of the eyes), and the complete virtual image corresponding to the target image can be viewed at any viewing location in the eye box.

In embodiments of this application, a location of the target image in the image displayed by the image generation unit corresponds to the viewing location in the eye box of the virtual image display apparatus, and the location of the target image in the image displayed by the image generation unit changes with the viewing location, that is, target images corresponding to different viewing locations in the eye box of the virtual image display apparatus have different locations in the image displayed by the image generation unit. Because the image light output by the image generation unit corresponds to the image displayed by the image generation unit and the virtual image is formed based on the image light, a location, in an entire display region of the virtual image display apparatus, of the virtual image corresponding to the target image also changes with the viewing location. In a case in which a size of the virtual image corresponding to the target image is fixed and a size of an optical aperture of the virtual image display apparatus and a viewing distance are fixed, compared with a solution in which the virtual image corresponding to the target image is directly imaged in the entire display region of the virtual image display apparatus, in this solution, a user can view, in a larger range, the complete virtual image corresponding to the target image, so that a size of the eye box is increased. This is convenient for use by the user.

Herein, the viewing distance may be a distance from the viewing location to a center of the virtual image in a chief ray direction of a central field of view of the virtual image display apparatus, or may be a distance from the viewing location to a center of a reference optical element. The reference optical element is an optical element that is closest to a viewer and that is of optical elements participating in imaging in an optical path, for example, a curved mirror closest to the viewer on a desktop display, or a windshield of a transportation means in which a HUD is disposed.

In addition, compared with a manner in which sizes of some optical elements in an optical system of the virtual image display apparatus are increased to increase the optical aperture, so as to expand the eye box, in embodiments of this application, an optical system with a small optical aperture may be used in the virtual image display apparatus. Because a size of the optical aperture is usually related to a size of the optical system, a larger optical aperture indicates a larger size of the optical system; on the contrary, a smaller optical aperture indicates a smaller size of the optical system. Therefore, embodiments of this application further help obtain a virtual image display apparatus with a smaller size.

In embodiments of this application, the location of the target image in the image displayed by the image generation unit is a location, in an entire image region of the image displayed by the image generation unit, of a first image region in which the target image is located. For example, the location of the target image in the image displayed by the image generation unit may be represented by coordinates of at least some pixels in the first image region.

In some examples, the location of the target image may be represented by using coordinates of a reference point and a size of the target image. Herein, the reference point may be any point in the target image, for example, a center point of the target image, a vertex of the target image (for example, an upper left vertex or a lower left vertex of a rectangular target image), or any point on an outer contour line of the target image. The coordinates of the reference point are coordinates of a pixel corresponding to the reference point in a to-be-displayed image. The size of the target image includes a length, a width, an area, and the like of the target image. The location of the target image in the image displayed by the image generation unit may be uniquely determined with reference to the coordinates of the reference point and the size of the target image.

In some other examples, the location of the target image may be represented by using coordinates of a reference point set, and the reference point set includes at least two reference points. Coordinates of all reference points in the reference point set can play a positioning function and indicate a size of the target image. For example, the reference point set includes four vertices of a rectangular target image, two vertices on a diagonal of a rectangular target image, or the like. A location of the target image in a to-be-displayed image may be uniquely determined based on the coordinates of the reference point set.

That locations of two target images are different may mean that pixels included in the target images are at least partially different. It is assumed that a first target image and a second target image are two target images at different locations. That pixels included in the first target image and the second target image are different includes the following several cases: The first target image and the second target image include a same quantity of pixels, and coordinates of some or all pixels are different (the second target image may be obtained by translating the first target image); a quantity of pixels included in the first target image is greater than a quantity of pixels included in the second target image, and pixels of the first target image include a pixel of the second target image (the second target image may be obtained by scaling the first target image); and a quantity of pixels included in the first target image is greater than a quantity of pixels included in the second target image, and some pixels of the second target image are the same as some pixels of the first target image (the second target image may be obtained by scaling and translating the first target image).

In embodiments of this application, the target image may be an image of any content. For example, when the virtual image display apparatus is a desktop display system, the target image may be a photo, a video image, a text, or the like. For another example, when the virtual image display apparatus is a HUD, the target image may include at least one of an augmented reality (augmented reality, AR) display image and a status display image. The augmented reality display image is used to display information such as indication information and navigation information of an external object. The indication information of the external object includes but is not limited to an assured clear distance ahead, a surrounding obstacle, and a reversing camera video. The navigation information includes but is not limited to a direction arrow, a distance, and driving time. The status display image is used to display status information of a transportation means. An automobile is used as an example. The status information of the transportation means includes but is not limited to information such as a driving speed, a driving mileage, a fuel amount, a water temperature, and a vehicle light status.

In some examples, locations, corresponding to some viewing locations in the eye box, of the target image are the entire image region of the image displayed by the image generation unit 51, that is, the image displayed by the image generation unit 51 includes only the target image. Locations of target images corresponding to some other viewing locations in the eye box are a partial image region of the image displayed by the image generation unit 51, that is, the image displayed by the image generation unit 51 includes the target image and a background image. The background image is an image other than the target image in the to-be-displayed image.

In some other examples, locations, corresponding to all viewing locations in the eye box, of the target image are a partial image region of the image displayed by the image generation unit 51.

In embodiments of this application, the background image is a static image or a dynamic image. For example, the static image may be a pure color image (for example, green or black), a geometric pattern, or a picture or photo of any other content. The dynamic image may be an image switched between a plurality of static images, an image including a graph that changes with time, or the like.

Content of the background image is not limited in this application. In some examples, the background image may be an image associated with content of the target image. For example, the background image may be obtained by processing a part of the target image or the entire target image, and a processing manner includes but is not limited to one or more fuzzing and blurring. In some other examples, the background image may be one or more images with fixed content.

In some examples, the virtual image corresponding to the target image is a three-dimensional image or a two-dimensional image. When the target image occupies a partial image region of the image displayed by the image generation unit 51, the virtual image corresponding to the target image is located in a partial display region of the display region of the virtual image display apparatus 51.

In some examples, a virtual image corresponding to the background image does not exist, or is a three-dimensional image or a two-dimensional image. For example, when the background image is a black image, the image light output by the image generation unit 51 does not include light corresponding to the background image. In this case, the virtual image corresponding to the background image does not exist. If an ambient environment (for example, a desktop display) of the imaging unit is black, the virtual image of the background image viewed by the user at the viewing location is black. If an ambient environment (for example, a HUD) of the imaging unit is bright, the user cannot view the virtual image of the background image at the viewing location. For another example, when the background image is a non-pure black image, the virtual image of the background image may be three-dimensional or two-dimensional.

Optionally, when the virtual image displayed by the virtual image display apparatus 51 includes the virtual image corresponding to the target image and the virtual image corresponding to the background image, the virtual image corresponding to the background image is on a periphery of the virtual image corresponding to the target image or the virtual image corresponding to the target image covers at least a part of the virtual image corresponding to the background image. Herein, that the virtual image corresponding to the target image covers at least a part of the virtual image corresponding to the background image means that the virtual image corresponding to the target image is at a location that is in front of the virtual image corresponding to the background image and that is close to the viewer, so that at least a part of the virtual image corresponding to the background image is shielded by the virtual image corresponding to the target image.

In embodiments of this application, the image generation unit 51 is also referred to as an optical receiver or transmitter. In some examples, the image generation unit 51 may include a light source, an optical modulator, and a driver. The light source is used to produce a light beam. The driver is configured to drive the optical modulator based on image data of the to-be-displayed image. The optical modulator is configured to modulate, driven by the driver, a light beam generated by the light source to form image light. The optical modulator includes but is not limited to a liquid crystal modulator, liquid crystal on silicon (liquid crystal on silicon, LCoS), a micro-electro-mechanical system (micro-electro-mechanical system, MEMS), or a digital micromirror device (digital micromirror device, DMD). In some other examples, the image generation unit 51 may alternatively be a display, for example, an organic light-emitting diode (organic light-emitting diode, OLED) display. A structure of the image generation unit 51 is not limited in this application, provided that image light carrying image information can be formed based on the obtained image data.

In embodiments of this application, the imaging unit 52 includes one or more optical elements. The optical element includes but is not limited to a reflector or a lens. The reflector includes a planar reflector, a concave reflector, and a convex reflector. The lens includes a convex lens, a concave lens, and a free-form lens. A structure of the imaging unit 52 is not limited in this application, provided that a virtual image can be formed based on the image light output by the image generation unit 51.

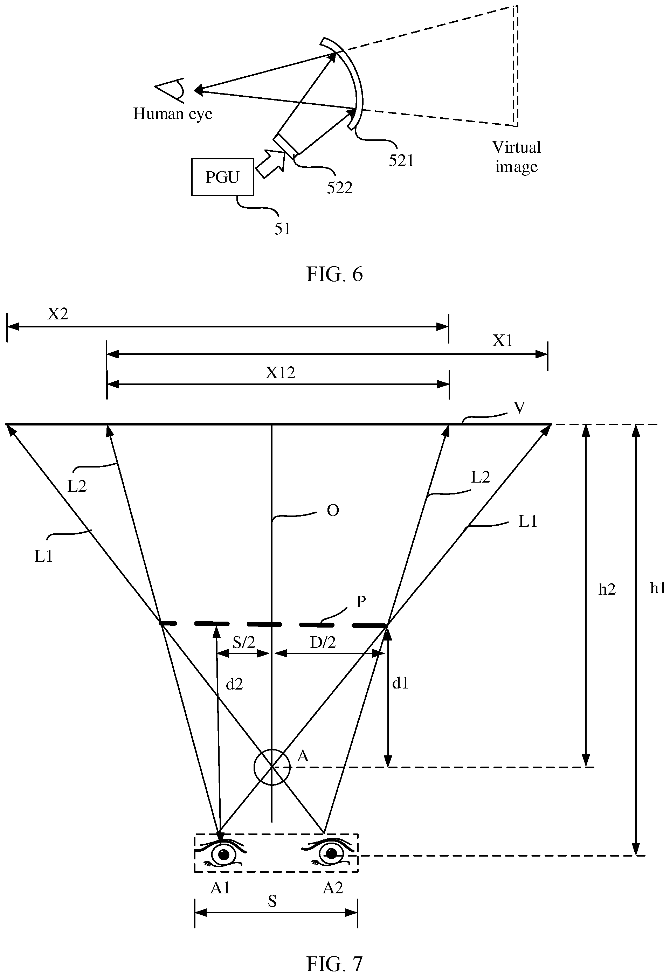

FIG. 6 is a diagram of a structure of a virtual image display apparatus according to an embodiment of this application. As shown in FIG. 6, the imaging unit 52 includes a curved mirror 521. The curved mirror 521 is configured to reflect image light output by the image generation unit 51, to form a virtual image.

Optionally, the imaging unit 52 further includes a diffusion screen 522. The diffusion screen 522 is configured to: diffuse the image light output by the image generation unit 51, and then output the image light to the curved mirror 521.

For example, the virtual image display apparatus in FIG. 6 may be a desktop display system.

FIG. 7 is a diagram of a relationship between a viewing location in an eye box of a virtual image display apparatus and a reference point according to an embodiment of this application. As shown in FIG. 7, a dashed box represents an eye box, and the eye box includes a plurality of viewing locations. A binocular center location is used as a viewing location. FIG. 7 shows only one viewing location. When a virtual image V remains unchanged, at a location of a left eye A1, a user can view a right part of the virtual image V, namely, a part of a right region X1. At a location of a right eye A2, the user can view a left part of the virtual image V, namely, a part of a left region X2. An overlapping region X12 exists between the right region X1 and the left region X2.

The phenomenon that different parts of the virtual image can be viewed at different viewing locations is caused by characteristics of an optical system of a virtual image imaging unit. In an optical element of the imaging unit, there is an aperture diaphragm used to limit a maximum opening angle (which may be referred to as an aperture angle) of marginal rays in a spot imaging light beam on an optical axis. An aperture of the aperture diaphragm may be referred to as an optical aperture of the virtual image display apparatus. Due to limitation of the aperture diaphragm, the user can view the different parts of the virtual image V at the different viewing locations.

It is assumed that a viewing distance corresponding to any viewing location in the eye box is a first viewing distance h1. Herein, the viewing distance is a distance between a viewing location and a center of the virtual image in a chief ray direction of a central field of view of the virtual image display apparatus. A chief ray of the central field of view of the virtual image display apparatus is a ray from the center of the virtual image to a center of the aperture diaphragm, and the chief ray is a central ray of a light beam participating in imaging. For example, the chief ray is shown by a straight line O in FIG. 7. A vertex of a first angle of view corresponding to a display region is used as a reference point A, and a distance between the reference point A and the center of the virtual image is used as a reference distance h2. The first viewing distance h1 is greater than the reference distance h2. The reference point A is a point of intersection between first marginal rays in the display region due to limitation of the aperture diaphragm, for example, a point of intersection between two first marginal rays L1 in FIG. 6, and the chief ray passes through the reference point A.

The reference point is the vertex of the first angle of view of the display region. If one eye of the user is located at the reference point, a complete virtual image displayed in the display region can be viewed. When a viewing location of the user is defined by using a binocular center location, if the viewing location of the user is far away from the reference point, the user may view a small non-display region (a peripheral region of the display region). If the viewing location of the user is sufficiently far away from the reference point, a virtual image in a part of the display region is viewed, and an image in a non-display region is completely invisible. Therefore, when a viewing distance corresponding to any viewing location in the eye box of the virtual image display apparatus is greater than a viewing distance corresponding to the reference point, a display region viewed by the user occupies a large proportion of an entire viewing region of the user. This helps improve user experience.

In embodiments of this application, the display region includes a first display subregion used to display a virtual image corresponding to a target image. When a center of the first display subregion coincides with a center of the display region, a ratio of a first distance d1 to a second distance d2 falls within a ratio range. The first distance d1 is a distance between the reference point A and a center point, and the second distance d2 is a distance between a center location of the eye box and the center point. The center location of the eye box is on the chief ray O. The center point is a point of intersection between the chief ray O and a plane P on which a point of intersection between a first marginal ray L1 and a second marginal ray L2 is located. The first marginal ray L1 is a marginal ray corresponding to the first angle of view. The second marginal ray L2 is a marginal ray corresponding to a second angle of view corresponding to the first display subregion. The ratio range is [20%, 90%]. Herein, there are an infinite quantity of first marginal rays L1 and second marginal rays L2, and only two first marginal rays and two second marginal rays are shown in the figure. Correspondingly, there are an infinite quantity of points of intersection between the first marginal rays L1 and the second marginal rays L2, to form a roughly circular region. A radial size of the roughly circular region is a size of the optical aperture of the virtual image display apparatus.

When the ratio of the first distance d1 to the second distance d2 falls within the ratio range, most parts of the display region of the virtual image display apparatus can be viewed at each viewing location in the eye box, and the first display subregion used to display the target image occupies a large area in the entire display region. This is convenient for the user to view, and provides good user experience.

It should be noted that, in some examples, because the aperture diaphragm is not in a propagation direction of a light beam between the viewing location and the virtual image, herein, the aperture of the aperture diaphragm is determined by using a region including points of intersection between the first marginal rays L1 and the second marginal rays L2. For example, for a HUD, image light is propagated from below a windshield to the windshield, and then reflected to a human eye through the windshield. In this case, an aperture diaphragm is not in a propagation direction of a light beam between the human eye and a virtual image. In some other examples, for example, in a desktop display system, an aperture diaphragm is in a propagation direction of a light beam between a viewing location and a virtual image. In this case, a point of intersection between a first marginal ray L1 and a second marginal ray L2 is an aperture edge of the aperture diaphragm.

In some examples, the ratio of the first distance d1 to the second distance d2 is equal to a ratio of a difference between an optical aperture D of the virtual image display apparatus and a reference interpupillary distance S to a sum of the optical aperture D and the reference interpupillary distance S. Herein, the reference interpupillary distance is a specified value, and may be set based on an actual requirement. For example, a value range of the reference interpupillary distance may be 55 mm to 75 mm, for example, may be 65 mm. That is, the ratio may be represented by using formula (1).

$$\frac{d1}{d2} = \frac{D - S}{D + S} \ (1)$$

When the ratio of the first distance to the second distance satisfies formula (1), if the user views at the center location of the eye box, the virtual image corresponding to the target image may be located in the middle of the entire display region of the virtual image display apparatus, and located in an overlapping region between display regions viewed by both eyes, for example, the overlapping region X12 in FIG. 7. In this way, an eye box of a large size can be obtained on the premise of a large range of the first display subregion. This improves viewing experience of the user.

In some examples, in the eye box, an area of a target image corresponding to a first viewing location is greater than an area of a target image corresponding to a second viewing location, and a viewing distance corresponding to the first viewing location is less than a viewing distance corresponding to the second viewing location. For example, the target image corresponding to the first viewing location is obtained by scaling up or down the target image corresponding to the second viewing location. In other words, the virtual image corresponding to the target image increases as the viewing distance corresponding to the viewing location decreases, or the virtual image corresponding to the target image decreases as the viewing distance corresponding to the viewing location increases.

In this way, when viewing at the first viewing location close to the virtual image, the user can view a large virtual image of the target image; and when viewing at the second viewing location far away from the virtual image, the user can view a small virtual image of the target image. Due to limitation of an aperture diaphragm, a closer distance between the user and the virtual image indicates a larger range of the display region that can be viewed by the user, and a longer distance between the user and the virtual image indicates a smaller range of the display region that can be viewed by the user. Therefore, the virtual image of the target image can be scaled up when the user is closer to the virtual image, and the virtual image of the target image can be scaled down when the user is farther away from the virtual image, to ensure that the user can always view the complete virtual image of the target image, view few parts of a virtual image corresponding to a background image, and even cannot view the virtual image corresponding to the background image. This extends a size of the eye box in a depth direction (a chief ray direction).

In some other examples, the virtual image corresponding to the target image is translated along with translation of the viewing location, and a translation direction of the virtual image corresponding to the target image is opposite to a translation direction of the viewing location. Therefore, in the eye box, a virtual image of a target image corresponding to a third viewing location deviates toward a first direction relative to a virtual image of a target image corresponding to a fourth viewing location by using the chief ray of the central field of view of the virtual image display apparatus as a reference, and the third viewing location deviates toward a second direction relative to the fourth viewing location by using the chief ray as a reference. The first direction and the second direction are two opposite directions by using the chief ray as a reference.

Herein, that the third viewing location deviates toward the second direction relative to the fourth viewing location by using the chief ray as a reference means that the third viewing location is farther away from the chief ray in the second direction than the fourth viewing location, and the second direction is a radially outward direction by using the chief ray as a center.

Due to limitation of the aperture diaphragm, the viewing location of the user deviates from the chief ray in a direction perpendicular to the chief ray. In this case, the viewed virtual image moves in a direction perpendicular to the chief ray and opposite to a deviation direction of the viewing location of the user. In this way, when the user views at the third viewing location close to the chief ray, a center of a virtual image of a viewed target image is close to the chief ray; and when the user views at the fourth viewing location far away from the chief ray, a center of a virtual image of a viewed target image is far away from the chief ray, to ensure that the user can always view a complete virtual image of the target image, and cannot view a virtual image corresponding to the background image.

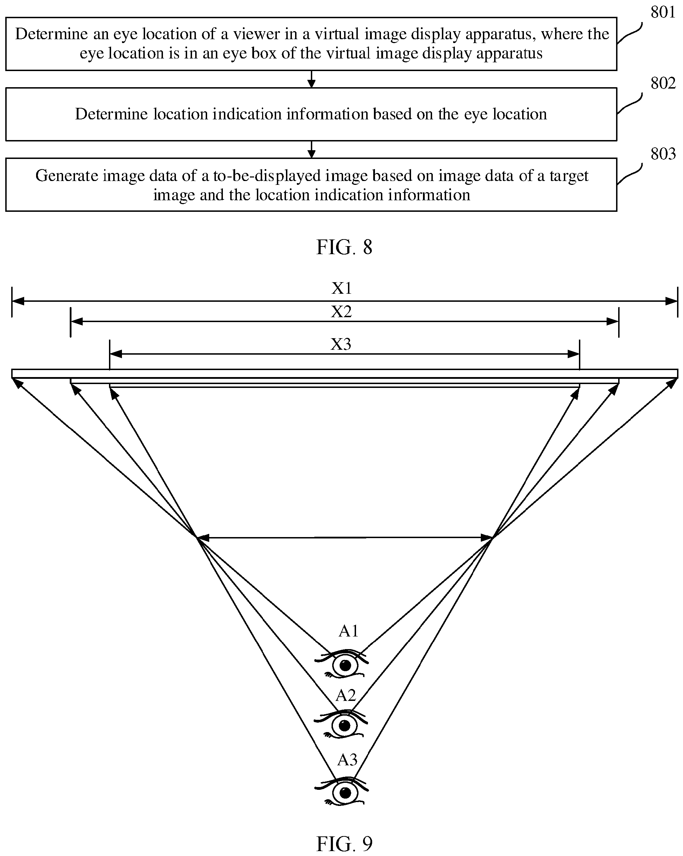

FIG. 8 is a schematic flowchart of an image data generation method according to an embodiment of this application. The method is used to provide image data of a to-be-displayed image for the virtual image display apparatus shown in FIG. 5 or FIG. 6. The method may be performed by a processor. The processor may be integrated into the virtual image display apparatus, or may be an external component of the virtual image display apparatus. As shown in FIG. 8, the method includes the following steps.

S801: Determine an eye location of a viewer in the virtual image display apparatus, where the eye location is in an eye box of the virtual image display apparatus.

Herein, the eye location of the viewer may be a binocular center location of the viewer, a monocular location of the viewer, or the like.

In some examples, an eye image of the viewer may be obtained by a capturing device, and the eye location of the viewer is determined based on the obtained eye image. The capturing device may be a red-green-blue (red-green-blue, RGB) camera, a binocular camera, an infrared camera, a depth camera, or the like. A manner of determining the eye location is not limited in this application, and any manner in a related technology may be used. The capturing device may be located in front of the viewer, to conveniently obtain the eye image of the viewer. For example, the capturing device may be disposed on the top of a housing of a desktop display device or the top of a windshield of a transportation means.

S802: Determine location indication information based on the eye location.

The location indication information indicates a location of a target image in the to-be-displayed image. Location indication information corresponding to different viewing locations in the eye box indicates different locations of the target image. A location of the target image changes with the eye location of the viewer.

In a possible implementation, the location indication information indirectly indicates the location of the target image in the to-be-displayed image. For example, the location indication information includes location information of a first display subregion, the location information of the first display subregion indicates a location of the first display subregion in a display region of the virtual image display apparatus, and the first display subregion is used to display a virtual image corresponding to the target image. The virtual image is formed by scaling up the to-be-displayed image, and locations of the target image in the to-be-displayed image are in a one-to-one correspondence with locations of the virtual image corresponding to the target image in the entire display region. Therefore, the location information of the first display subregion may indirectly reflect the location of the target image in the to-be-displayed image.

In this implementation, S802 includes: determining, based on a correspondence between a viewing location and location information of a display subregion, location information of a first display subregion corresponding to the eye location.

The correspondence includes a plurality of viewing locations in the eye box and location information of display subregions corresponding to the viewing locations. For example, the location information of the display subregion includes geometric information of the display subregion and a location of a reference point in the display subregion, and the geometric information of the display subregion indicates an area and/or a shape of the display subregion. When the shape of the display subregion is a default shape, the geometric information of the display subregion may indicate only the area of the display subregion. For example, the shape of the display subregion is a rectangle, and the geometric information of the display subregion includes a length and a width of the display subregion. For another example, the shape of the display subregion is a circle, and the geometric information of the display subregion includes a diameter or a radius of the display subregion. There may be one or more reference points. For example, the reference point may be a center point of the display subregion, two end points on a diagonal of a rectangular display subregion, two end points of a diameter of a circular display subregion, or the like. A manner of the location information of the display subregion is not limited in this application, provided that a shape and a size of the display subregion and a location of the display subregion in the entire display region can be determined.

In some examples, in the correspondence, an area of a display subregion corresponding to a first viewing location is greater than an area of a display subregion corresponding to a second viewing location, and a viewing distance corresponding to the first viewing location is less than a viewing distance corresponding to the second viewing location.

For example, as shown in FIG. 9, it is assumed that A1 is the first viewing location, A2 is the second viewing location, and a viewing distance corresponding to A1 is less than a viewing distance corresponding to A2. An area of a display subregion X1 corresponding to A1 is greater than an area of a display subregion X2 corresponding to X2. For another example, it is assumed that A2 is the first viewing location, A3 is the second viewing location, and a viewing distance corresponding to A2 is less than a viewing distance corresponding to A3. An area of a display subregion X2 corresponding to A2 is greater than an area of a display subregion X3 corresponding to A3.

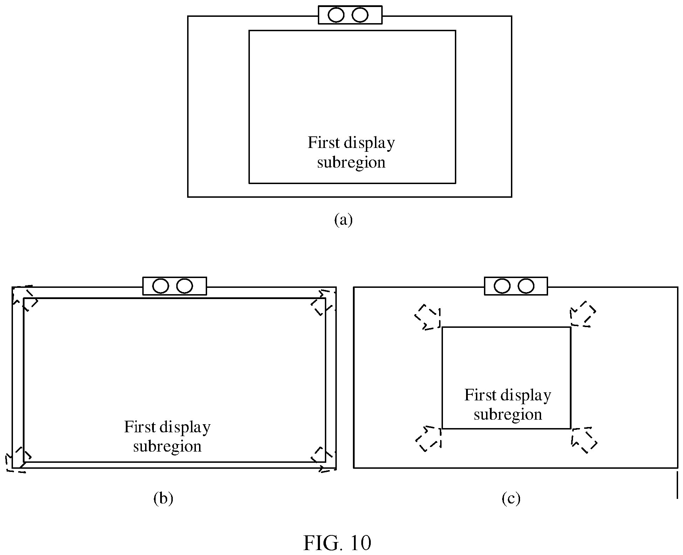

(a) in FIG. 10 is a diagram of a relationship between a first display subregion corresponding to the viewing location A2 and an entire display region. (b) in FIG. 10 is a diagram of a relationship between a first display subregion corresponding to the viewing location A1 and an entire display region. (c) in FIG. 10 is a diagram of a relationship between a first display subregion corresponding to the viewing location A3 and an entire display region. It can be learned from FIG. 10 that the first display subregion corresponding to A1 is obtained by scaling up the first display subregion corresponding to A2, and the first display subregion corresponding to A3 is obtained by scaling down the first display subregion corresponding to A2.

In some other examples, in the correspondence, a location of a display subregion corresponding to a third viewing location (which may be a location of a reference point in the display subregion) deviates toward a first direction relative to a location of a display subregion corresponding to a fourth viewing location by using a chief ray of a central field of view of the virtual image display apparatus as a reference, and the third viewing location deviates toward a second direction relative to the fourth viewing location by using the chief ray as a reference. The first direction and the second direction are two opposite directions by using the chief ray as a reference.

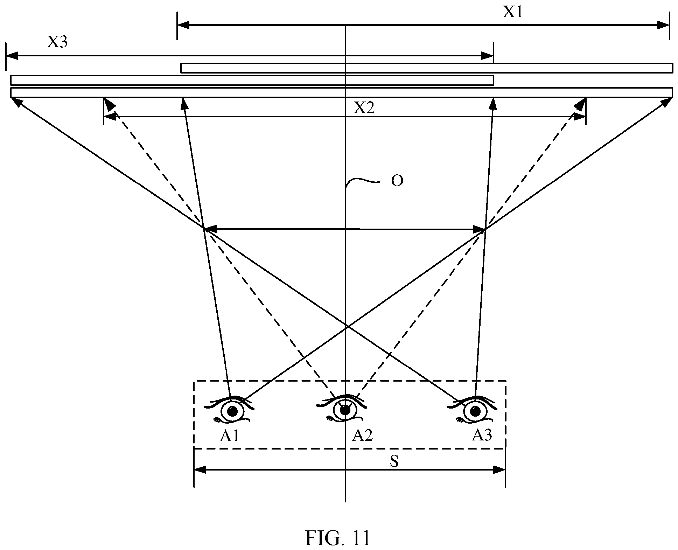

For example, as shown in FIG. 11, it is assumed that A1 is the third viewing location, and A2 is the fourth viewing location. A chief ray O is used as a reference, and A1 deviates leftward relative to A2. In this case, a display subregion X1 corresponding to A1 deviates rightward relative to a display subregion X2 corresponding to A2. For another example, it is assumed that A3 is the third viewing location, and A2 is the fourth viewing location. A chief ray O is used as a reference, and A3 deviates rightward relative to A2. In this case, a display subregion X3 corresponding to A3 deviates leftward relative to a display subregion X2 corresponding to A2.

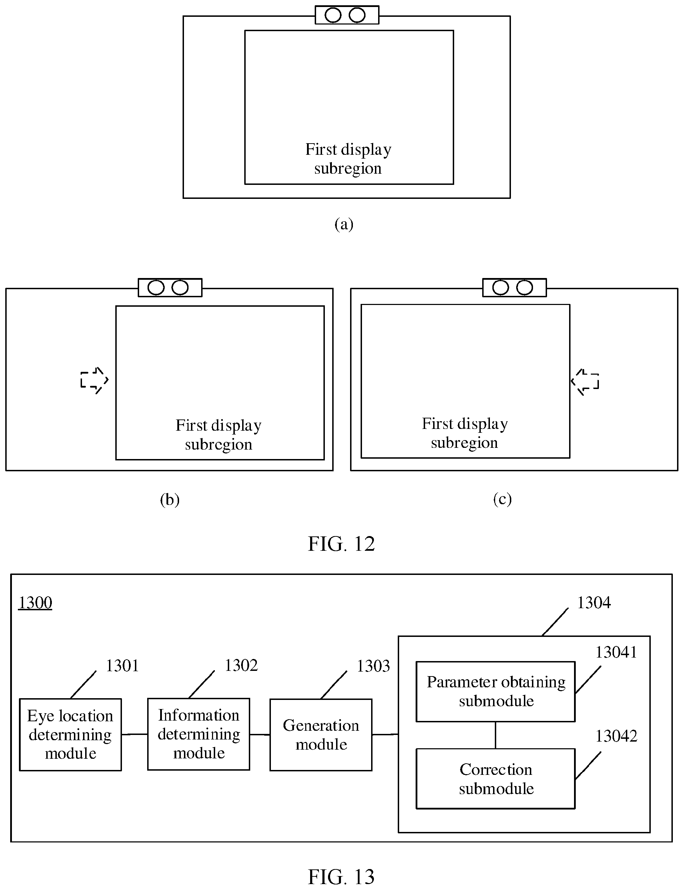

(a) in FIG. 12 is a diagram of a relationship between a first display subregion corresponding to the viewing location A2 and an entire display region. (b) in FIG. 12 is a diagram of a relationship between a first display subregion corresponding to the viewing location A1 and an entire display region. (c) in FIG. 12 is a diagram of a relationship between a first display subregion corresponding to the viewing location A3 and an entire display region. It can be learned from FIG. 12 that the first display subregion corresponding to A1 is obtained by moving rightward the first display subregion corresponding to A2, and the first display subregion corresponding to A3 is obtained by moving leftward the first display subregion corresponding to A2.

In embodiments of this application, the correspondence between the viewing location and the location information of the display subregion may be obtained based on a field of view of an optical system of the virtual image display apparatus and a geometric relationship between viewing locations in the eye box.

In another possible implementation, the location indication information directly indicates the location of the target image in the to-be-displayed image. For example, the location indication information includes location information of the target image.

In this implementation, S802 includes: determining, based on a correspondence between a viewing location and location information of an image region, location information of a first image region corresponding to the eye location.

The correspondence includes a plurality of viewing locations in the eye box and location information of image regions corresponding to the viewing locations. For example, the location information of the image region includes geometric information of the image region and a location of a reference point in the image region, and the geometric information of the image region indicates an area and/or a shape of a first display subregion. For the location information of the image region, refer to the foregoing location information of the display subregion. Detailed descriptions are omitted herein.

In this implementation, a correspondence between a viewing location and location information of a display subregion may be first obtained based on a field of view of an optical system of the virtual image display apparatus and a geometric relationship between viewing locations in the eye box; and then the correspondence between the viewing location and the location information of the display subregion is converted into a correspondence between the viewing location and the location information of the image region.

S803: Generate the image data of the to-be-displayed image based on image data of the target image and the location indication information.

When the location indication information indicates that the target image is located in an entire image region of the to-be-displayed image, that is, the to-be-displayed image includes only the target image, S803 includes: using the image data of the target image as the image data of the to-be-displayed image.

When the location indication information indicates that the target image is located in a partial image region of the to-be-displayed image, that is, the to-be-displayed image includes the target image and a background image, S803 includes: combining the image data of the target image and image data of the background image to obtain the image data of the to-be-displayed image, where the target image is at a location indicated by the location indication information. In some examples, the background image is located in a region other than the region in which the target image is located in the to-be-displayed image. In some other examples, the background image is located in the entire image region of the to-be-displayed image, and the target image is located above the background image.

In some examples, if content of the background image is associated with content of the target image, in S803, the image data of the background image is first processed to obtain the image data of the background image, and then the image data of the target image and the image data of the background image are combined. Herein, a manner of processing the target image includes but is not limited to blurring, fuzzing, and increasing transparency. One or more of these manners may be used.

In some other examples, if content of the background image is not associated with content of the target image, in S803, the image data of the background image is first obtained, and then the image data of the target image and the image data of the background image are combined.

In embodiments of this application, a manner of combining the image data of the target image and the image data of the background image includes any one of the following:

In a first manner, partial image data that is in the image data of the background image and that corresponds to a second image region is obtained, where the second image region is a region other than the first image region in the to-be-displayed image, and the first image region is the region in which the target image is located; and the partial image data is spliced with the image data of the target image to obtain the image data of the to-be-displayed image, so that the target image is in the location indicated by the location indication information.

In a second manner, the image data of the target image is used to replace image data that is in the image data of the background image and that corresponds to the location indicated by the location indication information.

In a third manner, the image data of the target image and the image data of the background image are superimposed and combined, so that the target image is located above the background image, and the target image is in the location indicated by the location indication information.

The virtual image display apparatus includes a plurality of optical elements. These optical elements cause distortion of the virtual image displayed by the virtual image display apparatus, and different display subregions of the display region correspond to different distortion degrees. Therefore, distortion correction needs to be performed on the target image based on the location of the first display subregion used to display the virtual image of the target image. To be specific, the method may further include: performing distortion correction processing on the image data of the target image based on the eye location or the location indication information.

For example, the performing distortion correction processing on the image data of the target image based on the eye location or the location indication information includes: obtaining a distortion correction parameter corresponding to the eye location or the location indication information, where the distortion correction parameter is used to compensate for distortion caused by an optical element of the virtual image display apparatus; and performing distortion correction processing on the image data of the target image based on the distortion correction parameter.

In a case in which distortion correction processing is performed on the image data of the target image based on the eye location, a correspondence between a viewing location and the distortion correction parameter may be pre-established. The distortion correction parameter corresponding to the eye location is determined based on the correspondence between the viewing location and the distortion correction parameter.

In some examples, the correspondence between the viewing location and the distortion correction parameter includes two sub-correspondences, and the two sub-correspondences are a correspondence between the viewing location and the location of the display subregion, and a correspondence between the location of the display subregion and the distortion correction parameter. A location of the first display subregion corresponding to the eye location may be determined based on the correspondence between the viewing location and the location of the display subregion. Then, a distortion correction parameter corresponding to the location of the first display subregion is determined based on the correspondence between the location of the display subregion and the distortion correction parameter. The distortion correction parameter corresponding to the location of the first display subregion is the distortion correction parameter corresponding to the eye location.

In some other examples, the correspondence between the viewing location and the distortion correction parameter may be a direct correspondence between the viewing location and the distortion correction parameter. The distortion correction parameter corresponding to the eye location is determined based on the direct correspondence. The direct correspondence may be generated based on the foregoing two sub-correspondences.

In a case in which distortion correction processing is performed on the image data of the target image based on the location indication information, a correspondence between a location of the image region and the distortion correction parameter may be pre-established. The distortion correction parameter corresponding to the eye location is determined based on the correspondence between the location of the image region and the distortion correction parameter.

In some examples, the correspondence between the location of the image region and the distortion correction parameter includes two sub-correspondences, and the two sub-correspondences are a correspondence between the location of the image region and the location of the display subregion, and a correspondence between the location of the display subregion and the distortion correction parameter. A location of a first display subregion corresponding to the location indicated by the location indication information may be determined based on the correspondence between the location of the image region and the location of the display subregion. Then, a distortion correction parameter corresponding to the location of the first display subregion is determined based on the correspondence between the location of the display subregion and the distortion correction parameter. The distortion correction parameter corresponding to the location of the first display subregion is the distortion correction parameter corresponding to the location indication information.

In some other examples, the correspondence between the location of the image region and the distortion correction parameter may be a direct correspondence between the location of the image region and the distortion correction parameter. A distortion correction parameter corresponding to the location indicated by the location indication information is determined based on the direct correspondence. The direct correspondence may be generated based on the foregoing two sub-correspondences.

For example, the correspondence between the location of the display subregion and the distortion correction parameter may be obtained in the following manner.

First, a distortion grid parameter corresponding to the entire display region of the virtual image display apparatus is obtained through testing and/or mathematical simulation. For example, the distortion grid parameter corresponding to the entire display region of the virtual image display apparatus is determined based on a surface type (including but not limited to a spherical surface, an aspherical surface, and a free-form curved surface) of each optical element in the optical system of the virtual image display apparatus, a surface type parameter (including but not limited to a curvature, a coefficient of ovality, an aspheric coefficient, and a polynomial coefficient of a free-form curved surface), a size of each optical element, and the like. The distortion grid parameter is a distortion grid including an array of $N \times M$ points, where N and M are integers, and each point represents a real location of a virtual image formed after a field of view ray passes through the optical system.

Then, a distortion correction grid parameter corresponding to the entire display region is determined based on the distortion grid parameter and an ideal grid parameter. Herein, the ideal grid parameter is a distortion grid including an array of $N \times M$ points, where a quantity of points of an ideal grid is the same as a quantity of points of the distortion grid, and points of the ideal grid are in a one-to-one correspondence with points of the distortion grid. Each point of the ideal grid represents an ideal location of a virtual image formed after a field of view ray passes through an ideal optical system. For example, a distortion correction parameter corresponding to the display region may be obtained by performing corresponding point-by-point subtraction between the distortion grid parameter and the ideal grid parameter. The distortion correction parameter is a distortion correction grid including an array of $N \times M$ points.

Distortion correction parameters of some grid points are selected from the distortion correction grid based on the location of the first display subregion, and the target image is corrected based on the distortion correction parameters corresponding to the selected grid points, so that distortion correction at a location of a human eye observation point can be implemented.

In a case in which optical performance of the virtual image display apparatus is ideal, the distortion correction process may be omitted.

FIG. 13 is a diagram of a structure of an image data generation apparatus according to an embodiment of this application. The apparatus may be implemented as a part of the apparatus or the entire apparatus by using software, hardware, or a combination thereof. The apparatus provided in this embodiment of this application can implement the procedure in FIG. 8 in embodiments of this application. As shown in FIG. 13, an apparatus 1300 includes an eye location determining module 1301, an information determining module 1302, and a generation module 1303. The eye location determining module 1301 is configured to determine an eye location of a viewer in a virtual image display apparatus, where the eye location is in an eye box of the virtual image display apparatus. The information determining module 1302 is configured to determine location indication information based on the eye location, where the location indication information indicates a location of a target image in a to-be-displayed image, and the location of the target image changes with the eye location of the viewer. The generation module 1303 is configured to generate image data of the to-be-displayed image based on image data of the target image and the location indication information, where the image data of the to-be-displayed image is used by the virtual image display apparatus to form a virtual image in a display region.

In a possible implementation, the location indication information includes location information of a first display subregion, the location information of the first display subregion indicates a location of the first display subregion in the display region of the virtual image display apparatus, and the first display subregion is used to display a virtual image corresponding to the target image. The information determining module 1302 is configured to determine, based on a correspondence between a viewing location and location information of a display subregion, the location information of the first display subregion corresponding to the eye location.

In another possible implementation, the location indication information includes location information of a first image region, and the first image region is a region in which the target image is located. The relationship determining submodule 13021 is configured to determine, based on a correspondence between a viewing location and location information of an image region, location information of a first image region corresponding to the eye location.

In some examples, the generation module 1303 is configured to combine the image data of the target image and image data of a background image to obtain the image data of the to-be-displayed image, where the target image is at a location indicated by the location indication information.

Optionally, the apparatus further includes a correction module 1304. The correction module 1304 is configured to perform distortion correction processing on the image data of the target image based on the eye location or the location indication information.

For example, the correction module 1304 includes a parameter obtaining submodule 13041 and a correction submodule 13042. The parameter obtaining submodule 13041 is configured to obtain a distortion correction parameter corresponding to the eye location or the location indication information, where the distortion correction parameter is used to compensate for distortion caused by an optical element of the virtual image display apparatus. The correction submodule 13042 is configured to perform distortion correction processing on the image data of the target image based on the distortion correction parameter.

It should be noted that, when the image data generation apparatus provided in the foregoing embodiment generates the image data, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above. In addition, the image data generation apparatus provided in the foregoing embodiment is based on a same concept as embodiments of the image data generation method. For a specific implementation process of the image data generation apparatus, refer to the method embodiments. Details are not described herein again.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a terminal device (which may be a personal computer, a mobile phone, a communication device, or the like) or the processor (processor) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

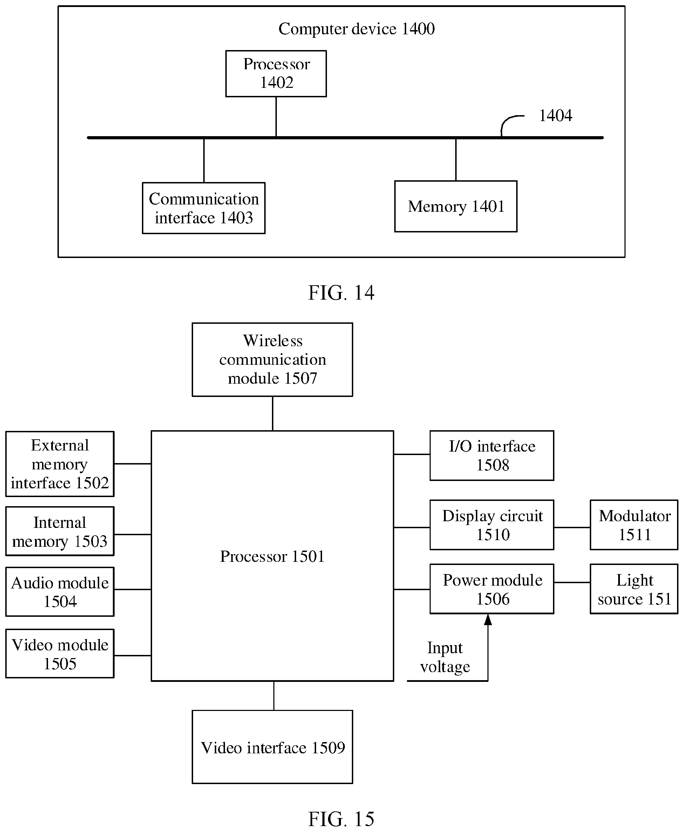

An embodiment of this application further provides a computer device. FIG. 14 is diagram of an example of a possible architecture of a computer device 1400.

The computer device 1400 includes a memory 1401, a processor 1402, a communication interface 1403, and a bus 1404. The memory 1401, the processor 1402, and the communication interface 1403 implement communication connection with each other through the bus 1404.

The memory 1401 may be a ROM, a static storage device, a dynamic storage device, or a RAM. The memory 1401 may store a program. When the program stored in the memory 1401 is executed by the processor 1402, the processor 1402 and the communication interface 1403 are configured to perform a device access method. The memory 1401 may further store a data set. For example, some storage resources in the memory 1401 are divided into a data storage module, configured to store image data and the like.

The processor 1402 may be a general-purpose CPU, a microprocessor, an application-specific integrated circuit (application-specific integrated circuit, ASIC), a graphics processing unit (graphics processing unit, GPU), or one or more integrated circuits.

The processor 1402 may alternatively be an integrated circuit chip, and has a signal processing capability. In an implementation process, some or all functions of a signal processing apparatus in this application may be implemented through an integrated logic circuit of hardware in the processor 1402 or instructions in a form of software. The processor 1402 may alternatively be a general-purpose processor, a digital signal processor (digital signal processor, DSP), an ASIC, a field programmable gate array (field programmable gate array, FPGA) or another programmable logic device, a discrete gate or transistor logic device, or a discrete hardware component. The processor may implement or perform the methods disclosed in the foregoing embodiments of this application. The general-purpose processor may be a microprocessor, or the processor may be any conventional processor, or the like. The steps of the method disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1401. The processor 1402 reads information from the memory 1401, and implements, in combination with the hardware of the processor 1402, some functions of the signal processing apparatus in embodiments of this application.

The communication interface 1403 implements communication between the computer device 1400 and another device or a communication network by using a transceiver module, for example but not limited to a transceiver. For example, the received image data may be obtained through the communication interface 1403.

The bus 1404 may include a path for transmitting information between components (for example, the memory 1401, the processor 1402, and the communication interface 1403) of the computer device 1400.

The descriptions of procedures corresponding to the foregoing accompanying drawings have respective focuses. For a part of a procedure that is not described in detail, refer to related descriptions of another procedure.

An embodiment of this application further provides a computer-readable storage medium. The computer-readable storage medium stores computer instructions. When the computer instructions stored in the computer-readable storage medium are executed by a computer device, the computer device performs the image data generation method provided above.

An embodiment of this application further provides a computer program product including instructions. When the computer program product runs on a computer device, the computer device performs the image data generation method provided above.

An embodiment of this application further provides a chip, configured to perform the image data generation method shown in FIG. 8.

An embodiment of this application further provides a display device. The display device includes a processor and a virtual image display apparatus. The virtual image display apparatus is any one of the foregoing virtual image display apparatuses. The processor is configured to generate image data of a to-be-displayed image according to the method shown in FIG. 8. The virtual image display apparatus is configured to display a virtual image based on the image data.

Optionally, the display device further includes a power supply that supplies power to the processor and a PGU.

In some examples, the display device is a head-up display device or a desktop display device.

FIG. 15 is a schematic circuit of a display device according to an embodiment of this application. As shown in FIG. 15, a circuit in the display device mainly includes a main processor (host CPU) 1501, an external memory interface 1502, an internal memory 1503, an audio module 1504, a video module 1505, a power module 1506, a wireless communication module 1507, an I/O interface 1508, a video interface 1509, a display circuit 1510, and a modulator 1511. The main processor 1501 may be connected, through a bus, to peripheral components of the main processor, such as the external memory interface 1502, the internal memory 1503, the audio module 1504, the video module 1505, the power module 1506, the wireless communication module 1507, the I/O interface 1508, the video interface 1509, and the display circuit 1510. The main processor 1501 may be referred to as a front-end processor.

In addition, the schematic circuit in embodiments of this application does not constitute a specific limitation on the display device. In some other embodiments of this application, the display device may include more or fewer components than those shown in the figure, or a combination of some components, or splits from some components, or a different component layout. The components shown in the figure may be implemented by hardware, software, or a combination of software and hardware.

The main processor 1501 includes one or more processing units. For example, the main processor 1501 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-Network Processing Unit, NPU), and/or the like. Different processing units may be independent components, or may be integrated into one or more processors.

A memory may be further disposed in the main processor 1501, and is configured to store instructions and data. In some embodiments, the memory in the main processor 1501 is a cache. The memory may store instructions or data just used or cyclically used by the main processor 1501. If the main processor 1501 needs to use the instructions or the data again, the main processor 1501 may directly invoke the instructions or the data from the memory. This avoids repeated access and reduces waiting time of the main processor 1501, so that system efficiency is improved.

In some embodiments, the display device may further include a plurality of input/output (Input/Output, I/O) interfaces 1508 connected to the main processor 1501. The interface 1508 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/-Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1508 may be connected to a device like a mouse, a touchpad, a keyboard, a camera, a loudspeaker/speaker, or a microphone, or may be connected to a physical button (for example, a volume button, a brightness adjustment button, and a power button) on the display device.

The external memory interface 1502 may be configured to connect to an external storage card, for example, a micro-SD card, to extend a storage capability of the display device. The external storage card communicates with the main processor 1501 through the external memory interface 1502, to implement a data storage function.

The internal memory 1503 may be configured to store computer-executable program code, and the computer-executable program code includes instructions. The internal memory 1503 may include a program storage region and a data storage region. The program storage region may be used to store an operating system, an application required by at least one function (for example, a call function or a time setting function), and the like. The data storage region may be used to store data (such as a phone book and world clock) and the like created when the display device is used. In addition, the internal memory 1503 may include a high-speed random access memory, and may further include a nonvolatile memory, for example, at least one magnetic disk storage device, a flash memory device, or a universal flash storage (universal flash storage, UFS). The main processor 1501 runs the instructions stored in the internal memory 1503 and/or the instructions stored in the memory disposed in the main processor 1501, to perform various function applications and data processing of the display device.

The display device can implement an audio function, for example, music playing and calling, by using the audio module 1504, the application processor, and the like.

The audio module 1504 is configured to convert digital audio information into an analog audio signal for output, and is also configured to convert an analog audio input into a digital audio signal. The audio module 1504 may be further configured to: encode and decode an audio signal, for example, perform audio playing or recording. In some embodiments, the audio module 1504 may be disposed in a processor 101, or some functional modules in the audio module 1504 are disposed in the processor 101.

The video interface 1509 may receive an audio and video signal input externally, and may be specifically a high definition multimedia interface (High Definition Multimedia Interface, HDMI), a digital visual interface (Digital Visual Interface, DVI), a video graphics array (Video Graphics Array, VGA), or a display port (Display port, DP), or the like. The video interface 1509 may further output a video. When the display device is used as a head-up display, the video interface 1509 may receive a speed signal and a power signal that are input from a peripheral device, and may further receive an externally input AR video signal. When the display device is used as a projector, the video interface 1509 may receive a video signal input by an external computer or terminal device.

The video module 1505 may decode a video input through the video interface 1509, for example, perform H.264 decoding. The video module may further encode a video collected by the display device, for example, perform H.264 encoding on a video collected by an external camera. In addition, the main processor 1501 may also decode the video input through the video interface 1509, and then output a decoded image signal to the display circuit 1510.

The display circuit 1510 and the modulator 1511 are configured to display a corresponding image. In this embodiment, the video interface 1509 receives an externally input video source signal, and the video module 1505 performs decoding and/or digitization processing and then outputs one or more image signals to the display circuit 1510. The display circuit 1510 drives, based on the input image signals, the modulator 1511 to perform imaging on incident polarized light, to output at least two third light beams. The main processor 1501 may also output one or more video signals to the display circuit 1510.

In this embodiment, the display circuit 1510 and the modulator 1511 are electronic components in a modulation unit 230, and the display circuit 1510 may be referred to as a drive circuit.

The power module 1506 is configured to supply power to the main processor 1501 and a light source 151 based on input electric power (for example, a direct current). The power module 1506 may include a rechargeable battery, and the rechargeable battery may supply power to the main processor 1501 and the light source 151. Light emitted by the light source 151 may be transmitted to the modulator 1511 for imaging, to form an image optical signal.

The wireless communication module 1507 may enable the display device to perform wireless communication with the outside, and may provide wireless communication solutions such as a wireless local area network (Wireless Local Area Network, WLAN) (for example, a Wireless Fidelity (Wireless Fidelity, Wi-Fi) network), Bluetooth (Bluetooth, BT), a global navigation satellite system (Global Navigation Satellite System, GNSS), frequency modulation (Frequency Modulation, FM), near field communication (Near Field Communication, NFC), and infrared technology (Infrared, IR). The wireless communication module 1507 may be one or more components integrating at least one communication processor module. The wireless communication module 1507 receives an electromagnetic wave through the antenna, performs frequency modulation and filtering processing on the electromagnetic wave signal, and sends a processed signal to the main processor 1501. The wireless communication module 1507 may further receive a to-be-sent signal from the main processor 1501, perform frequency modulation and amplification on the signal, and convert a processed signal into an electromagnetic wave for radiation through the antenna.

In addition, video data decoded by the video module 1505 may be input through the video interface 1509 and received by the wireless communication module 1507 in a wireless manner or read from an external memory. For example, the display device may receive video data from a terminal device or an in-vehicle entertainment system through a wireless local area network in a vehicle. The display device may further read audio/-video data stored in the external memory.

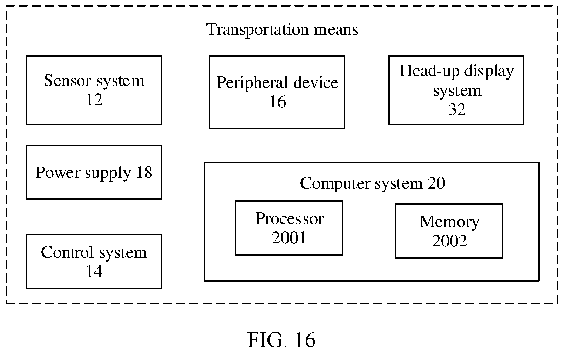

An embodiment of this application further provides a transportation means, and the transportation means includes any one of the foregoing display devices. The display device may be mounted on a transportation means. FIG. 16 is a diagram of a possible functional framework of a transportation means according to an embodiment of this application.

As shown in FIG. 16, the functional framework of the transportation means may include various subsystems such as a sensor system 12, a control system 14, one or more peripheral devices 16 (one is shown as an example in the figure), a power supply 18, a computer system 20, and a head-up display system 32. Optionally, the transportation means may further include another functional system, for example, an engine system that supplies power to the transportation means, and this is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like, and this is not limited in this application.

The control system 14 may include several elements, for example, a steering unit, a brake unit, a lighting system, an auto driving system, a map navigation system, a network time system, and an obstacle avoidance system shown in the figure. Optionally, the control system 14 may further include elements such as a throttle controller configured to control a driving speed of a vehicle and an engine controller, and this is not limited in this application.

The peripheral device 16 may include several elements such as a communication system, a touchscreen, a user interface, a microphone, and a speaker shown in the figure. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 18 represents a system used to provide power or energy for the vehicle, and may include but is not limited to a rechargeable lithium battery and lead-acid battery. During actual application, one or more battery modules in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is also disposed inside the computer system 20, or may be disposed outside the computer system 20, for example, used as a cache in the transportation means. This is not limited in this application.

The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the diagram of the functional framework of the vehicle shown as FIG. 16. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to the program code or the instructions, the memory 2002 may store information such as a road map, a driving route, and sensor data. The computer system 20 may implement a vehicle-related function in combination with other elements in the diagram of the functional framework of the vehicle, such as a sensor and the GPS in the sensor system. For example, the computer system 20 may control a driving direction, a driving speed, or the like of the transportation means based on data input of the sensor system 12, and this is not limited in this application.

The head-up display system 32 may include several elements such as a windshield, a controller, and a head-up display (the head-up display device). The controller is configured to: generate an image (for example, generate an image including a vehicle status such as a vehicle speed and a power/fuel amount, and an image of augmented reality AR content) according to a user instruction, and send the image to the head-up display for display. The head-up display may include an image generation unit and a reflection assembly. The windshield is configured to cooperate with the head-up display to implement a light path of the head-up display system, so that a target image is presented in front of a driver. It should be noted that functions of some elements in the head-up display system may alternatively be implemented by another subsystem of the vehicle. For example, the controller may alternatively be an element in the control system.

In this application, as shown in FIG. 16, four subsystems are included. The sensor system 12, the control system 14, the computer system 20, and the head-up display system 32 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in embodiments of this application.

Unless otherwise defined, a technical term or a scientific term used herein should have a general meaning understood by a person of ordinary skill in the art of the present disclosure. The terms "first", "second", "third", and the like used in the specification and claims of this patent application are not intended to indicate any order, quantity, or significance, but are intended to distinguish between different components. Likewise, "a/an", "one", or the like is not intended to indicate a quantity limitation either, but is intended to indicate existing at least one. The terms such as "include" and "comprise" mean that an element or object before the "include" or "comprise" encompasses elements or objects and their equivalents listed after the "include" or "comprise", and other elements or objects are not excluded.

The foregoing descriptions are merely an embodiment of this application, but are not intended to limit this application. Any modification, equivalent replacement, or improvement made without departing from the principle of this application shall fall within the protection scope of this application.

**Claims**

1. A virtual image display apparatus, comprising an image generation unit and an imaging unit, wherein

   the image generation unit is configured to: obtain image data, display an image based on the image data, and output image light, wherein the image displayed by the image generation unit comprises a target image, a location of the target image in the displayed image corresponds to a viewing location in an eye box of the virtual image display apparatus, and the location of the target image in the displayed image changes with the viewing location; and
   the imaging unit is configured to form a virtual image in a display region based on the image light.

2. The virtual image display apparatus according to claim 1, wherein a viewing distance corresponding to the viewing location in the eye box is greater than a viewing distance corresponding to a reference point, and the reference point is a vertex of a first angle of view corresponding to the display region.

3. The virtual image display apparatus according to claim 2, wherein the display region comprises a first display subregion used to display a virtual image corresponding to the target image; and

   when a center of the first display subregion coincides with a center of the display region, a ratio of a first distance to a second distance falls within a ratio range, wherein the first distance is a distance between the reference point and a center point, the second distance is a distance between a center location of the eye box and the center point, the center location of the eye box is on a chief ray of a central field of view of the virtual image display apparatus, the center point is a point of intersection between the chief ray and a plane on which a point of intersection between a first marginal ray and a second marginal ray is located, the first marginal ray is a marginal ray corresponding to the first angle of view, and the second marginal ray is a marginal ray corresponding to a second angle of view corresponding to the first display subregion, wherein

the ratio range is [20%, 90%].

4. The virtual image display apparatus according to any one of claims 1 to 3, wherein in the eye box, an area of a target image corresponding to a first viewing location is greater than an area of a target image corresponding to a second viewing location, and a viewing distance corresponding to the first viewing location is less than a viewing distance corresponding to the second viewing location; and/or

in the eye box, a virtual image of a target image corresponding to a third viewing location deviates toward a first direction relative to a virtual image of a target image corresponding to a fourth viewing location by using the chief ray of the central field of view of the virtual image display apparatus as a reference, and the third viewing location deviates toward a second direction relative to the fourth viewing location by using the chief ray as a reference, wherein the first direction and the second direction are two opposite directions by using the chief ray as a reference.

5. The virtual image display apparatus according to any one of claims 1 to 4, wherein the virtual image corresponding to the target image increases as the viewing distance corresponding to the viewing location decreases, or the virtual image corresponding to the target image decreases as the viewing distance corresponding to the viewing location increases; and/or

the virtual image corresponding to the target image is translated along with translation of the viewing location, and a translation direction of the virtual image corresponding to the target image is opposite to a translation direction of the viewing location.

6. The virtual image display apparatus according to any one of claims 1 to 5, wherein the displayed image further comprises a background image, the background image is an image other than the target image in the displayed image, and the background image is a static image or a dynamic image.

7. The virtual image display apparatus according to any one of claims 1 to 6, wherein the virtual image comprises the virtual image corresponding to the target image and a virtual image corresponding to the background image; and the virtual image corresponding to the background image is on a periphery of the virtual image corresponding to the target image or the virtual image corresponding to the target image covers at least a part of the virtual image corresponding to the background image.

8. The virtual image display apparatus according to any one of claims 1 to 7, wherein the virtual image corresponding to the target image is a three-dimensional image or a two-dimensional image.

9. An image data generation method, comprising:

determining an eye location of a viewer in a virtual image display apparatus, wherein the eye location is in an eye box of the virtual image display apparatus;
determining location indication information based on the eye location, wherein the location indication information indicates a location of a target image in a to-be-displayed image, and the location of the target image changes with the eye location of the viewer; and
generating image data of the to-be-displayed image based on image data of the target image and the location indication information, wherein the image data of the to-be-displayed image is used by the virtual image display apparatus to form a virtual image in a display region.

10. The method according to claim 9, wherein the location indication information comprises location information of a first display subregion, the location information of the first display subregion indicates a location of the first display subregion in the display region of the virtual image display apparatus, and the first display subregion is used to display a virtual image corresponding to the target image; and

the determining location indication information based on the eye location comprises:
determining, based on a correspondence between a viewing location and location information of a display subregion, the location information of the first display subregion corresponding to the eye location.

11. The method according to claim 10, wherein in the correspondence, an area of a display subregion corresponding to a first viewing location is greater than an area of a display subregion corresponding to a second viewing location, and a viewing distance corresponding to the first viewing location is less than a viewing distance corresponding to the second viewing location; and/or

in the correspondence, a location of a display subregion corresponding to a third viewing location deviates toward a first direction relative to a location of a display subregion corresponding to a fourth viewing location by using a chief ray of a central field of view of the virtual image display apparatus as a reference, and the third viewing location deviates toward a second direction relative to the fourth viewing location by using the chief ray as a reference, wherein the first direction and the second direction are two opposite directions by using the chief ray as a reference.

12. The method according to claim 9, wherein the location indication information comprises location information of a first image region, and the first image region is a region in which the target image is located; and
the determining location indication information based on the eye location comprises:
determining, based on a correspondence between a viewing location and location information of an image region, location information of a first image region corresponding to the eye location.

13. The method according to any one of claims 9 to 12, wherein the generating image data of the to-be-displayed image based on image data of the target image and the location indication information comprises:
combining the image data of the target image and image data of a background image to obtain the image data of the to-be-displayed image, wherein the target image is at a location indicated by the location indication information.

14. The method according to any one of claims 9 to 13, wherein the method further comprises:
performing distortion correction processing on the image data of the target image based on the eye location or the location indication information.

15. The method according to claim 14, wherein the performing distortion correction processing on the image data of the target image based on the eye location or the location indication information comprises:

obtaining a distortion correction parameter corresponding to the eye location or the location indication information, wherein the distortion correction parameter is used to compensate for distortion caused by an optical element of the virtual image display apparatus; and
performing distortion correction processing on the image data of the target image based on the distortion correction parameter.

16. A computer device, wherein the computer device comprises a processor and a memory, the memory is configured to store a software program, and the processor executes the software program stored in the memory, to enable the computer device to implement the method according to any one of claims 9 to 15.

17. A computer-readable storage medium, wherein the computer-readable storage medium stores computer instructions, and when the computer instructions in the computer-readable storage medium are executed by a computer device, the computer device is enabled to perform the method according to any one of claims 9 to 15.

18. A display device, comprising a processor and a virtual image display apparatus, wherein the processor is configured to generate image data of a to-be-displayed image based on the method according to any one of claims 9 to 15; and
the virtual image display apparatus is connected to the processor, the virtual image display apparatus is configured to display a virtual image based on the image data, and the virtual image display apparatus is the apparatus according to any one of claims 1 to 8.

19. The display device according to claim 18, wherein the display device is a head-up display device or a desktop display device.

20. A transportation means, comprising the display device according to claim 18 or 19, wherein the display device is mounted on the transportation means.

100a

FIG. 1

100b

FIG. 2

100c

FIG. 3

HUD

FIG. 4

50

51          52

Image generation unit → Imaging unit

FIG. 5

**FIG. 6**

**FIG. 7**

| Determine an eye location of a viewer in a virtual image display apparatus, where the eye location is in an eye box of the virtual image display apparatus | 801 |
|---|---|
| Determine location indication information based on the eye location | 802 |
| Generate image data of a to-be-displayed image based on image data of a target image and the location indication information | 803 |

FIG. 8

FIG. 9

First display
subregion

(a)

First display
subregion

(b)

First display
subregion

(c)

FIG. 10

FIG. 11

First display
subregion

(a)

First display
subregion

First display
subregion

(b)                                              (c)

FIG. 12

1300

1304

1301                    1302                    1303

Parameter obtaining
submodule

13041

Eye location
determining
module

Information
determining
module

Generation
module

Correction
submodule

13042

FIG. 13

Computer device 1400

Processor
1402

1404

Communication
interface 1403

Memory 1401

FIG. 14

Wireless
communication
module 1507

External
memory
interface 1502

Internal
memory 1503

Audio module
1504

Video module
1505

Processor 1501

I/O interface
1508

Display circuit
1510

Modulator
1511

Power module
1506

Light
source 151

Input
voltage

Video interface 1509

FIG. 15

Transportation means

Sensor system
12

Peripheral device
16

Head-up display
system
32

Power supply 18

Control system
14

Computer system 20

Processor
2001

Memory
2002

FIG. 16

## INTERNATIONAL SEARCH REPORT

| International application No. |
| --- |
| **PCT/CN2023/077023** |

### A.    CLASSIFICATION OF SUBJECT MATTER

G02B27/01(2006.01)i

According to International Patent Classification (IPC) or to both national classification and IPC

### B.    FIELDS SEARCHED

Minimum documentation searched (classification system followed by classification symbols)

IPC：G02B27/01，H04N

Documentation searched other than minimum documentation to the extent that such documents are included in the fields searched

Electronic data base consulted during the international search (name of data base and, where practicable, search terms used)

CNTXT, ENTXTC: 间隔, 距离, HUD, 抬头, 显示, 眼盒, 左眼, 右眼, 目标

### C.    DOCUMENTS CONSIDERED TO BE RELEVANT

| Category* | Citation of document, with indication, where appropriate, of the relevant passages | Relevant to claim No. |
| --- | --- | --- |
| X | CN 113448097 A (YAZAKI CORP.) 28 September 2021 (2021-09-28) <br> description, paragraphs 57-78, and figures 1-8 | 1, 4-20 |
| X | US 2021302727 A1 (YAZAKI CORP.) 30 September 2021 (2021-09-30) <br> description, paragraphs 23-51, and figures 1-8 | 1, 4-20 |
| X | CN 113671695 A (HUAWEI TECHNOLOGIES CO., LTD.) 19 November 2021 (2021-11-19) <br> description, paragraphs 43-108, and figures 1-4 | 1, 8-10, 12, 14-20 |
| X | CN 114326119 A (HUAWEI TECHNOLOGIES CO., LTD.) 12 April 2022 (2022-04-12) <br> description, paragraphs 43-104, and figures 1-4 | 1, 8-10, 12, 14-20 |
| Y | JP 2016137817 A (NIPPON SEIKI CO., LTD.) 04 August 2016 (2016-08-04) <br> description, paragraphs 13-36, and figures 5-6 | 2-3 |
| Y | CN 113448097 A (YAZAKI CORP.) 28 September 2021 (2021-09-28) <br> description, paragraphs 57-78, and figures 1-8 | 2-3 |
| Y | US 2021302727 A1 (YAZAKI CORP.) 30 September 2021 (2021-09-30) <br> description, paragraphs 23-51, and figures 1-8 | 2-3 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 June 2023** | **12 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/077023** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 111443490 A (ZHUJI HUAXUN ELECTRONIC TECHNOLOGY CO., LTD.) 24 July 2020 (2020-07-24)<br>entire document | 1-20 |

Form PCT/ISA/210 (second sheet) (July 2022)

## INTERNATIONAL SEARCH REPORT
### Information on patent family members

International application No.

**PCT/CN2023/077023**

| Patent document cited in search report | | | Publication date (day/month/year) | Patent family member(s) | | | Publication date (day/month/year) |
|---|---|---|---|---|---|---|---|
| CN | 113448097 | A | 28 September 2021 | JP | 2021154888 | A | 07 October 2021 |
| | | | | JP | 7130688 | B2 | 05 September 2022 |
| | | | | US | 2021306618 | A1 | 30 September 2021 |
| | | | | US | 11412205 | B2 | 09 August 2022 |
| | | | | EP | 3888966 | A1 | 06 October 2021 |
| | | | | EP | 3888966 | B1 | 11 May 2022 |
| US | 2021302727 | A1 | 30 September 2021 | US | 11256088 | B2 | 22 February 2022 |
| | | | | EP | 3892489 | A1 | 13 October 2021 |
| | | | | EP | 3892489 | B1 | 09 March 2022 |
| | | | | JP | 2021154889 | A | 07 October 2021 |
| | | | | JP | 7130689 | B2 | 05 September 2022 |
| CN | 113671695 | A | 19 November 2021 | None | | | |
| CN | 114326119 | A | 12 April 2022 | None | | | |
| JP | 2016137817 | A | 04 August 2016 | None | | | |
| CN | 111443490 | A | 24 July 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210742008X